# EUROPEAN PATENT APPLICATION

(11) **EP 4 748 799 A1**
(43) Date of publication of application: **27.05.2026**
(21) Application number: 24315535.5
(22) Date of filing: 25.11.2024
(51) Int. Cl.: C02F 1/461, C01B 17/74, C25B 1/24, C02F 103/34, C02F 1/04

(54) **PROCESS FOR THE TREATMENT OF ACID GAS WITH PRODUCTION OF SULFURIC ACID CO-PRODUCTION OF HYDROGEN**

(71) Applicant: TotalEnergies OneTech, 92400 Courbevoie (FR)
(72) Inventor: Veryasov, Gleb, 7181 Seneffe (BE); Grishin, André, 7181 Seneffe (BE); Kezibri, Nouaamane, 7181 Seneffe (BE)
(74) Representative: Mellet, Valérie Martine

(57) **Abstract**

A process for the production of sulfuric acid and hydrogen from acid gases comprising: a) providing bromine (3); b) providing acid gas (1) comprising hydrogen sulfide and ammonia; c) reacting the acid gas with bromine in a first reaction zone (5) to obtain a first liquid phase (7); e) mixing the obtained first liquid phase with an additional amount of bromine (17) and water (19) in a second reaction zone (15) to obtain a second liquid phase (21), g) performing a first distillation on the second liquid phase, to obtain a sulfuric acid-containing stream (33) and a sixth stream (43) comprising hydrogen bromide and/or bromine; i) performing a second distillation on the sulfuric acid-containing stream to obtain a fifth stream (39) comprising sulfuric acid and a seventh stream (45) comprising hydrogen bromide and/or bromine; j)subjecting the seventh stream to an electrolysis reaction to obtain a hydrogen-containing stream (47) and a bromine-containing stream (49).

## Description

### Technical field

This invention relates to processes and installations for treating and removing acid gases from industrial gas streams. It involves techniques for reducing the concentrations of harmful acid gases, such as hydrogen sulfide (H₂S) and ammonia (NH₃), in gas emissions. More particularly, it relates to the production of sulfuric acid and hydrogen from acid gas.

### Technical background

Acid gases are undesirable components in various industrial gas streams, primarily due to their corrosive nature and environmental impact. The release of acid gases, such as hydrogen sulfide (H₂S), into the atmosphere contributes to problems like acid rain. Consequently, stringent environmental regulations require industries to limit the emission of these gases into the atmosphere.

The most common sources of acid gases are combustion processes, oil and gas refining, and the treatment of sour natural gas. In these applications, gases like H₂S must be removed to prevent equipment corrosion, ensure safety, and comply with environmental regulations.

Conventional acid gas treatment typically involves using chemical solvents to absorb the unwanted gases from the stream.' These solvents can be categorized as amines (e.g., monoethanolamine (MEA), diethanolamine (DEA)), physical solvents, or hybrid mixtures. The amine-based processes are highly efficient for removing H₂S but involve high energy requirements for solvent regeneration.

Membrane-based separation technology has been increasingly explored for acid gas treatment. Membranes selectively permeate certain gases, allowing H₂S to be separated from methane-rich streams in natural gas processing.

Emerging technologies in acid gas treatment involve the use of solid sorbents, such as zeolites, metal-organic frameworks (MOFs), or activated carbon, for the adsorption of acid gases.

For example, WO2015/006873 discloses a method of producing sulfuric acid from a sour tail gas that comprises the steps of (a) obtaining a sour tail gas stream comprising H₂S or reduced sulfur species or a combination thereof from an oil and gas facility; (b) subjecting the sour tail gas stream to oxidation and obtaining an oxidized gas stream comprising SO₂; and, (c) utilizing the oxidized gas stream to obtain sulfuric acid and an SO₂ reduced tail gas stream.

The method may further comprise subjecting the oxidized gas stream to a regenerable absorption process.

Additionally, catalytic methods for converting H₂S to elemental sulfur via the Claus process, or utilizing oxidation catalysts to convert SO₂ to sulfuric acid, are known.

For example, most of the plants and refineries in operation today use the Claus process, in which reaction proceeds in two steps:

2 H₂S + 3 O₂ → 2 SO₂ + 2 H₂O

4 H₂S + 2 SO₂ → 3 S₂ + 4 H₂O

Where S₂ represents sulfur vapour, which is then condensed and conveyed in the form of melt or solid.

However, the process has limitations in that it requires an additional co-feed of fuel for lean streams (otherwise the flame inside the furnace becomes unstable), and it emits SOx.

WO93/20008 discloses a combination process for the removal of sulfur oxides (SOx) from gases containing both SOx and oxygen. The fluid used to remove the SOx contains sulfuric acid and bromine. The SOx is converted to sulfuric acid and the bromine is thereafter converted to hydrobromic acid. The hydrobromic acid is concentrated and catalytically converted to bromine for ultimate recycling in the SOx removal step. The SOx is finally recovered as a strong sulfuric acid.

WO2024/022950 discloses a process for producing hydrogen that comprises the following steps: a) providing a starting mixture containing bromine, water and a sulfur containing compound, b) reacting the starting mixture provided in step a) so as to produce a reaction mixture effluent comprising sulfuric acid and hydrogen bromide, c) separating the reaction mixture effluent obtained in step b) into one or more hydrogen bromide enriched compositions and into one or more sulfuric acid enriched compositions, wherein at least one hydrogen bromide enriched composition contains at most 1,000 ppm of sulfuric acid, wherein step c) comprises at least two distillation steps, d) subjecting at least a portion of the at least one hydrogen bromide enriched composition containing at most 1,000 ppm of sulfuric acid obtained in step c) to an electrolysis so as to obtain hydrogen and a bromine containing composition, wherein the electrolysis cell is operated at an operational temperature of at least 70°C, and e) recycling at least a portion of the bromine containing composition obtained in step d) back to step a).

WO2024022954A1 discloses a process for removing at least a sulfur containing compound from gas containing at least one sulfur containing compound, wherein the process comprises the following steps: a) contacting a gas stream containing at least one sulfur containing compound with a stream containing bromine and water so as to obtain a starting stream, b) reacting the starting stream provided in step a) so as to produce a reaction mixture effluent comprising sulfuric acid and hydrogen bromide, c) separating the reaction mixture effluent obtained in step b) into one or more hydrogen bromide enriched compositions and into one or more sulfuric acid enriched compositions, d) subjecting at least a portion of the at least one hydrogen bromide enriched composition obtained in step c) to a treatment, in which at least a portion of the hydrogen bromide enriched composition is converted to bromine, e) recycling at least a portion of the bromine containing composition obtained in step d) back to step a), and f) withdrawing gas, which is depleted in the at least one sulfur containing compound wherein step c) comprises at least one distillation step, wherein, in the case that the reaction mixture is a single-phase liquid composition, either the reaction mixture effluent or a mixture of the reaction mixture effluent and a sulfuric acid enriched composition obtained in step c) is subjected as feed to a first distillation step, or, in the case that the reaction mixture effluent is a two-phase gas-/liquid composition, first the two-phase gas-/liquid composition is separated into a gaseous portion of the reaction mixture effluent and into a liquid portion of the reaction mixture effluent, whereafter the liquid portion of the reaction mixture effluent or a mixture of the liquid portion of the reaction mixture effluent and a sulfuric acid enriched composition obtained in step c) is subjected as feed to a first distillation step, wherein the feed is separated in the first distillation step into a gaseous overhead composition of a hydrogen bromide enriched composition containing at most 1,000 ppm of sulfuric acid and into a liquid bottom composition of a sulfuric acid enriched composition containing more than 30% by weight of sulfuric acid and less than 1,000 ppm of hydrogen bromide, wherein a) at least a portion of the gaseous hydrogen bromide enriched composition obtained in the first distillation step as overhead composition is subjected to a water removal step so as to separate the hydrogen bromide enriched composition into a water enriched composition and into a gaseous hydrogen bromide-rich, water depleted composition comprising 90 to 99% by weight of hydrogen bromide and less than 10% by weight of water, wherein at least a portion of the gaseous hydrogen bromide-rich, water depleted composition is subjected in step d) to an electrolysis or to a thermal oxidation step, and/or P) step c) comprises at least two distillation steps, wherein the sulfuric acid enriched composition obtained as liquid bottom composition of the first distillation step is subjected to a second distillation step so as to produce an overhead composition and a bottom composition containing 60 to 95% by weight of sulfuric acid and 5 to 40% by weight of water based on the total weight of the bottom composition, wherein at least a portion of the bottom composition of the second distillation step is preferably subjected to a third distillation step so as to produce an overhead composition containing at least 99.0% by weight of water and less than 10 ppm of hydrogen bromine and a bottom composition containing at least 90% by weight of sulfuric acid and less than 10% by weight of water based on the total weight of the bottom composition, wherein a portion of the bottom composition obtained in the second distillation step and/or a portion of the bottom composition obtained in the third distillation step is recycled to and mixed as sulfuric acid enriched composition with the reaction mixture effluent or with the liquid portion of the reaction mixture effluent so as to obtain a mixture containing at least 35% by weight of sulfuric acid based on the total weight of the mixture, wherein the mixture is subjected as feed to the first distillation step.

There is still a need for a process and an installation for the treatment of acid gases from industrial gas streams, such as H₂S-containing acid gas. In particular, a treatment that allows the production of valuable products such as sulfuric acid and hydrogen.

### Summary

It has now been found that it is possible to produce hydrogen by the treatment of acid gas comprising ammonia, for instance, sour water stripper acid gas.

According to a first aspect, the disclosure provides a process for the production of sulfuric acid and hydrogen from acid gases remarkable in that it comprises the steps of:
a) providing bromine;
b) providing acid gas comprising hydrogen sulfide and ammonia,
c) reacting the acid gas with bromine in a first reaction zone under first reaction conditions comprising a first temperature of at most 80°C to obtain a first liquid phase comprising disulfur dibromide;
d) optionally, separating hydrogen bromide, which is also obtained in step c), from the first liquid phase and recovering a first stream comprising disulfur dibromide and a second stream comprising hydrogen bromide;
e) mixing the obtained first liquid phase, or the first stream if applicable, with an additional amount of bromine and water in a second reaction zone and under second reaction conditions comprising a second temperature of at least 80°C to obtain a second liquid phase comprising sulfuric acid, wherein the second temperature is higher than the first temperature;
f) optionally, separating the second liquid phase to obtain a third stream containing unreacted disulfur dibromide and a fourth stream comprising sulfuric acid;
g) performing a first distillation step on the second liquid phase, or on the fourth stream if applicable, to obtain a sulfuric acid-containing stream and a sixth stream comprising hydrogen bromide and/or bromine;
h) optionally recovering the sixth stream comprising hydrogen bromide and/or bromine, and recycling it to the second reaction zone;
i) performing a second distillation on the sulfuric acid-containing stream wherein the second distillation step is performed at a temperature and pressure higher than the temperature and pressure of the first distillation step to obtain a fifth stream comprising sulfuric acid and a seventh stream comprising hydrogen bromide and/or bromine;
j) subjecting the seventh stream to an electrolysis reaction to obtain a hydrogen-containing stream and a bromine-containing stream; wherein the seventh stream is fed at the anode of one or more electrolytic cells and a second input flow being a hydrobromide aqueous solution is fed at the cathode side; and
k) optionally, recovering the bromine-containing stream from the electrolysis reaction and recycling it to the first reaction zone and/or the second reaction zone.

As it can be understood from the above definition the invention allows for a good yield in hydrogen production as well as a minimizing the bromine loss (by preventing bromide cross over) and obtaining high-concentration sulfuric acid. The process and installation according to the disclosure allows for saving energy and for reducing size for the electrolyzer.

With preference, bromine is provided to have a molar ratio Br₂ / (H₂S + NH₃) in the first reaction zone of at least 1.5; preferably at least 1.6; more preferably at least 2.0, even more preferably at least 2.5; most preferably at least 3.0, even most preferably at least 3.5, and even most preferably at least 3.6.

In one or more embodiments, the separation step d) is performed and the process further comprises mixing the second stream with the seventh stream before the electrolysis reaction of step j).

In one or more embodiments, step d) of separation of the second liquid phase is a decantation step.

In one or more embodiments, the third stream containing unreacted disulfur dibromide is recycled into the second reaction zone.

In one or more embodiments, the first reaction conditions comprise a temperature ranging from 15°C to 60°C, preferably from 19°C to 40°C, most preferred at room temperature.

In one or more embodiments, the second reaction conditions comprise a temperature ranging from 90°C to 325°C; and/or a pressure ranging from 0.1 to 1.0 MPa.

In one or more embodiments, the second reaction conditions comprise a mass ratio between disulfur dibromide and water from 1:0.2 to 1:2, preferably from 1:0.3 to 1:1, most preferably from 1:0.5 to 1:0.7.

In one or more embodiments, the fifth stream comprising sulfuric acid comprises sulfuric acid at a concentration of at least 90 wt.% of H₂SO₄ based on the total weight of the fifth stream; preferably at least 95 wt.%.

In one or more embodiments, step j) comprises the following substeps:
**j-1)** providing one or more electrolytic cells each comprising an anode, a cathode, and an ion-exchange membrane placed between the anode and the cathode;
**j-2)** providing the sixth stream at the anode side of the one or more electrolytic cells wherein the sixth stream and the second input flow are or comprise a hydrogen bromide aqueous solution;
**j-3)** performing an electrolysis reaction to convert at least a part of the hydrogen bromide of the hydrogen bromide aqueous solution into bromine by operating the one or more electrolytic cells under electrolysis conditions; and
**j-4)** recovering a liquid effluent comprising bromine from the anode side and a gaseous effluent comprising hydrogen at the cathode side.

With preference, the electrolysis conditions of step j-3) comprises an anode current density ranging from 0.5 to less than 2.5 kA/m²; and step j) comprises a **step j-5)** of separating the liquid effluent comprising bromine by distillation or by decantation in a separation unit to obtain a fifth liquid phase comprising bromine; optionally step k) is performed wherein the fifth liquid phase comprising bromine is recycled to the first reaction zone and/or the second reaction zone.

Alternatively, the electrolysis conditions of step j-3) comprise an anode current density ranging from 2.5 to 10.0 kA/m²; and step k) recovering the bromine-containing stream from the electrolysis unit and recycling it to the first reaction zone and/or the second reaction zone is performed.

In one or more embodiments, the hydrogen-containing stream is sent to a separator to obtain a purified hydrogen stream and a separated stream, optionally the separated stream is recycled in the seventh stream.

In one or more embodiments, the second input flow is or comprises the second stream comprising hydrogen bromide and/or a fourth liquid phase comprising hydrogen bromide.

According to a second aspect, the disclosure provides for an installation for the treatment of acid gas according to the process of the first aspect, wherein the installation comprises
- a reactor as a first reaction zone to produce a first liquid phase of disulfur dibromide;
- optionally, a decanter as a means to separate and recover a first stream of disulfur dibromide and a second stream comprising hydrogen bromide;
- a reactor as a second reaction zone to produce a second liquid phase comprising sulfuric acid, and lines to convey the first liquid phase obtained in the first reaction zone to the second reaction zone;
- optionally, a decanter as a means to separate and recover a third stream containing unreacted disulfur dibromide and a fourth stream comprising sulfuric acid;
- a distillation unit comprising at least a first distillation column and a second distillation column arranged in series and lines to convey the second liquid phase, or the fourth stream if applicable, to the distillation unit;
- optionally a line to convey a sixth stream exiting the top of the first distillation column to the second reaction zone;
- an electrolysis unit comprising one or more electrolytic cells and lines to convey a second input flow and a seventh stream comprising hydrogen bromide and/or bromine , to the electrolysis unit; and
- optionally, means to recover a bromine-containing stream from the electrolysis unit and to recycle it to the first reaction zone and/or the second reaction zone.

With preference, the second input flow is of comprises the second stream.

In one or more embodiments, the means to recover a bromine-containing stream comprises a separation unit; with preference the separation unit comprises a decanter and/or one or more distillation columns.

In one or more embodiments, the installation comprises a separator and lines to convey a hydrogen-containing stream exiting the electrolysis unit to the separator.

### Description of the Figures

- Figure 1 illustrates an example of a process and installation according to the disclosure.
- Figure 2 illustrates an embodiment of a process and installation according to the disclosure.
- Figure 3 illustrates an embodiment of a process and installation according to the disclosure.
- Figure 4 illustrates a glass 2-wall reactor
- Figure 5 illustrates electrolytic cell configurations.

### Detailed description

For the disclosure, the following definitions are given:
The terms "comprising", "comprises" and "comprised of' as used herein are synonymous with "including", "includes" or "containing", "contains", and are inclusive or open-ended and do not exclude additional, non-recited members, elements or method steps. The terms "comprising", "comprises" and "comprised of" also include the term "consisting of".

The recitation of numerical ranges by endpoints includes, all integer numbers and, where appropriate, fractions subsumed within that range (*e.g.*, 1 to 5 can include 1, 2, 3, 4, 5 when referring to, for example, a number of elements, and can also include 1.5, 2, 2.75 and 3.80, when referring to, for example, measurements). The recitation of endpoints also includes the recited endpoint values themselves (*e.g.*, from 1.0 to 5.0 includes both 1.0 and 5.0). Any numerical range recited herein is intended to include all sub-ranges subsumed therein.

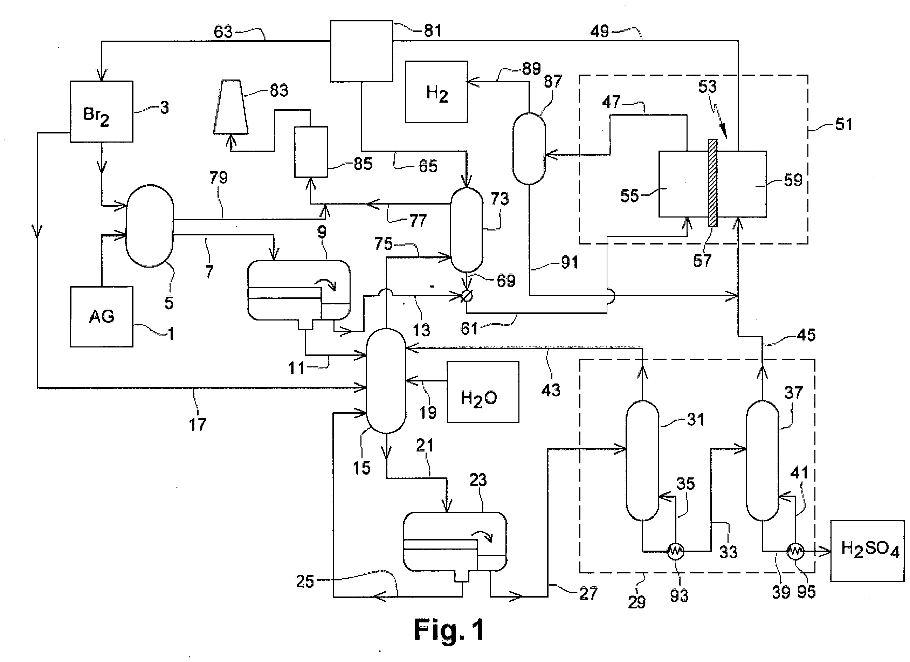

The present disclosure provides a process for the production of concentrated sulfuric acid and an installation to be used to perform such a process. The process and the installation will therefore be described jointly. Reference is made to Figures 1 to 3.
the disclosure provides a process for the production of acid sulfuric and hydrogen from acid gases characterized in that it comprises the steps of:
a) providing bromine (Br₂) 3
b) providing acid gas 1 comprising hydrogen sulfide (H₂S) and ammonia (NH₃),
c) reacting the acid gas 1 with bromine (Br₂) in a first reaction zone 5 under first reaction conditions comprising a first temperature of at most 80°C to obtain a first liquid phase 7 comprising disulfur dibromide (S₂Br₂);
d) optionally, separating hydrogen bromide, which is also obtained in step c), from the first liquid phase 7 and recovering a first stream 11 comprising disulfur dibromide and a second stream 13 comprising hydrogen bromide;
e) mixing the obtained first liquid phase 7, or the first stream 11 if applicable, with an additional amount of bromine 17 and water 19 in a second reaction zone 15 and under second reaction conditions comprising a second temperature of at least 80°C to obtain a second liquid phase 21 comprising sulfuric acid, wherein the second temperature is higher than the first temperature;
f) optionally, separating the second liquid phase 21 to obtain a third stream 25 containing unreacted disulfur dibromide and a fourth stream 27 comprising sulfuric acid;
g) performing a first distillation step on the second liquid phase 21, or on the fourth stream 27 if applicable, to obtain a sulfuric acid-containing stream 33 and a sixth stream 43 comprising hydrogen bromide and/or bromine;
h) optionally recovering the sixth stream 43 comprising hydrogen bromide and/or bromine and recycling it to the second reaction zone 15;
i) performing a second distillation on the sulfuric acid-containing stream 33 wherein the second distillation step is performed at a temperature and pressure higher than the temperature and pressure of the first distillation step to obtain a fifth stream 39 comprising purified sulfuric acid and a seventh stream 45 comprising hydrogen bromide and/or bromine;
j) subjecting the seventh stream 45 to an electrolysis reaction to obtain a hydrogen-containing stream 47 and a bromine-containing stream 49; wherein the seventh stream 45 is fed at the anode of one or more electrolytic cells 53 and a second input flow 61 comprising a hydrobromide aqueous solution is fed at the cathode side; and
k) optionally, recovering the bromine-containing stream 49 from electrolysis reaction and recycling it to the first reaction zone 5 and/or the second reaction zone 15.

The process can be performed in an installation comprising:
- a reactor as a first reaction zone 5 to produce a first liquid phase 7 of disulfur dibromide; preferably the reactor is a column reactor;
- optionally, a decanter 9 as a means to separate and recover a first stream 11 of disulfur dibromide and a second stream 13 comprising hydrogen bromide;
- a reactor (such as a mixing vessel) as a second reaction zone 15 to produce a second liquid phase 21 comprising sulfuric acid, and lines to convey the first liquid phase 7 obtained in the first reaction zone 5 to the second reaction zone 15;
- optionally, a decanter 23 as a means to separate and recover a third stream 25 containing unreacted disulfur dibromide and a fourth stream 27 comprising sulfuric acid;
- a distillation unit 29 comprising at least a first distillation column 31 and a second distillation column 37 arranged in series and lines to convey the second liquid phase 21, or the fourth stream 27 if applicable, to the distillation unit 29;
- optionally a line to convey the sixth stream 43 exiting the first distillation column 31 to the second reaction zone 15;
- an electrolysis unit 51 comprising one or more electrolytic cells 53 and lines to convey a second input flow 61 and the seventh stream 45 comprising hydrogen bromide and/or bromine to the electrolysis unit 51; and
- optionally, means to recover a bromine-containing stream 49 from the electrolysis unit 51 and to recycle it to the first reaction zone 5 and/or the second reaction zone 15.

### The steps a) of providing Bromine and b) of providing acid gas and the first reaction zone 5 and step c) reacting the acid gas 1 with bromine 3

In a preferred embodiment, the disclosure may comprise a step k) of recovering bromine from the electrolysis unit 51 and recycling it to the first reaction zone 5 and/or the second reaction zone 15. Thus at least a part of the bromine provided in step a) may be recycled bromine from step k).

The conversion of the acid gas comprising hydrogen sulfide into at least disulfur dibromide takes place in the first reaction zone 5. According to the disclosure, the acid gas further comprises ammonia, and reacting the acid gas 1 with bromine 3, further comprises the conversion of ammonia into hydrogen bromide and nitrogen into the first reaction zone 5.

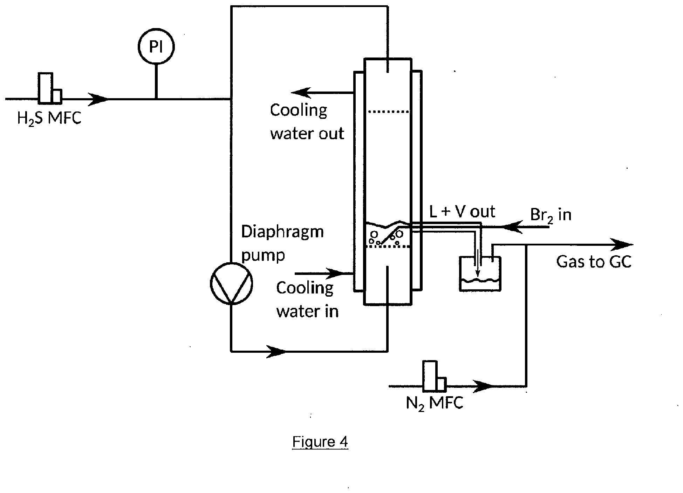

The first reaction zone can be a reactor of any design known in the art. In a preferred embodiment, the reactor is a column reactor, configured to allow for the continuous flow of reactants and products through the column, while maintaining a high level of contact between the reactants. Column reactors are well-known to the person skilled in the art and consist of a long cylindrical vessel or column, typically made of stainless steel or glass. With preference, the column reactor is a 2-wall glass column reactor. An example of such a column reactor is provided in Figure 4.

In another preferred embodiment, the first reaction zone 5 is a batch reactor, designed to process a single batch of reactants at a time, with the reaction taking place in a closed vessel. Further, the reaction products may be separated and used as described below.

The first reaction zone 5 is provided with at least one inlet for allowing the input of the acid gas 1 and at least one outlet for transferring the obtained first liquid phase 7 comprising at least disulfur dibromide, via conveying means, to the second reaction zone 15.

Bromine 3 can be provided to the first reaction zone 5 as a gaseous stream or as a 2-phase liquid stream in combination with water. Bromine is a compound used in different domains of the industry. It can be obtained from the bromide contained in the seawater using modified Balard's process. Alternatively, electrolysis of HBr can provide bromine.

Hydrogen sulfide appears as a colorless gas having a strong odour of rotten eggs. Hydrogen sulfide occurs naturally in crude petroleum, natural gas, volcanic gases, and hot springs. According to the present disclosure, examples of acid gases comprising hydrogen sulfide include exhaust gas produced from natural gas processing, shale gas processing, shale oil associated gas processing, refinery acid gas streams, gas from conventional oil fields, acid gas removal units or acid gas enrichment units. In particular, the acid gas comprising hydrogen sulfide comes from facilities.

For example, a primary feed stream may comprise carbonyl sulfide (COS) and/or other reduced sulfur species in addition to H₂S; and the COS and/or other sulfur species may be removed from the primary feed stream to produce the gaseous acid gas wherein said gaseous acid gas mainly comprise H₂S as sulfur species.

For example, a primary feed stream may comprise, in addition to ammonia, one or more from hydrocarbons, CO₂, amines (for instance, monoethanolamine (MEA)) and any mixture thereof. For example, a primary feed stream may comprise inert gases, for instance, nitrogen, helium, argon, and any mixture thereof. For example, a primary feed stream may comprise water.

For example, an acid gas 1 suitable for use in the process of the present disclosure is obtained by the treatment of a hydrocarbon feed stream in an oil and gas facility (refinery). For example, the oil and gas refinery comprises a gas/liquid separation unit to produce a methane-containing stream and a gas-reduced liquid stream. The gas-reduced liquid stream can be treated in a refinery that may include various hydrocracking and/or hydro-refining and/or hydro-finishing units, depending on the initial composition of the gas-reduced liquid stream. A liquid stream and a hydrocarbon-containing gaseous stream containing H₂S and NH₃ are produced in the refinery. The gaseous stream containing H₂S can be further treated in a scrubbing unit or an absorbing unit for the production of a product hydrocarbon stream having a reduced concentration of contaminants and an enriched-contaminant gas stream containing H₂S.

According to the disclosure, both the gaseous stream containing H₂S and the enriched-contaminant gas stream containing H₂S can be used as acid gas 1 comprising H₂S in step b) of the present process.

The amount of H₂S in the acid gas 1 may vary from 1 mol.% to 98 mol.% based on the total molar content of the gaseous acid gas. Preferably, the amount of H₂S in the gaseous acid gas is at least 1 mol.% based on the total molar content of the gaseous acid gas; preferably at least 10 mol.%; more preferably at least 30 mol.%; even more preferably at least 50 mol.%; most preferably at least 90 mol.%; even most preferably at least 95 mol.%.

The reactions taking place in the first reaction zone are according to the following equations:

H₂S + Br₂ → 2HBr + S

2H₂S + 3Br₂ → 4HBr + S₂Br₂

2S + Br₂ → S₂Br₂

In an embodiment of the present disclosure, the acid gas further comprises ammonia. The amount of ammonia in the acid gas 1 may vary from 1 mol.% to 98 mol.% based on the total molar content of the gaseous acid gas. Preferably, the amount of ammonia in the gaseous acid gas is at least 1 mol.% based on the total molar content of the gaseous acid gas; preferably at least 10 mol.%; more preferably at least 30 mol.%; even more preferably at least 50 mol.%.

The reaction taking place in the first reaction zone with ammonia is according to the following equation:

NH₃ + 1.5 Br₂ → 0.5 N₂ + 3 HBr

The person skilled in the art will have an advantage in ensuring that bromine is in excess relative to ammonia. This will help produce HBr instead of NH₄Br. When bromine is in excess, it fully reacts with ammonia to form hydrogen bromide instead of ammonium salts.

Thus, in the embodiment wherein the acid gas comprises ammonia, bromine is preferably provided to have a molar ratio Br₂ /(H₂S + NH₃) in the first reaction zone 5 of at least 1.5; preferably at least 1.6; more preferably at least 2.0, even more preferably at least 2.5; most preferably at least 3.0, even most preferably at least 3.5, and even most preferably at least 3.6.

In this case the acid gas comprises a mixture of H₂S and ammonia. The amount of the mixture in the acid gas 1 may vary from 2 mol.% to 99 mol.% based on the total molar content of the gaseous acid gas. Preferably, the amount of the mixture in the gaseous acid gas is at least 2 mol.% based on the total molar content of the gaseous acid gas; preferably at least 10 mol.%; more preferably at least 30 mol.%; even more preferably at least 50 mol.%; most preferably at least 90 mol.%; even most preferably at least 95 mol.%.

Those reactions take place in a reactor as the first reaction zone 5. The reactions are performed at a first temperature of at most 80°C. The cold temperature reduces further oxidation of S₂Br₂ and prevents Br₂ from excessive evaporation. Furthermore, it allows up to 100% conversion of the hydrogen sulfide without the need for the presence of a catalyst. Keeping the temperature below 80°C allows for limiting or avoiding the evaporation of bromine and the decomposition of S₂Br₂ to form S precipitates. Since the reaction (2S + Br₂ 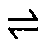 S₂Br₂) is exothermic, the person skilled in the art may use any cooling device or heat exchanger to keep the reaction temperature under control and below 80 °C or at the targeted first temperature range.

The first reaction conditions, therefore, include a first temperature of at most 80°C; with preference, a first temperature ranging from 15 to 60°C preferably from 19 to 40°C or above, most preferred ranging from 25 to 38°C (*i.e.*, at room temperature).

The first reaction conditions, therefore, include a first pressure of at most 0.5 MPa, with preference, a first pressure ranging from 0.1 MPa to 0.4 MPa, most preferably from 0.15 MPa to 0.3 MPa.

In another embodiment, the first reaction conditions comprise a reaction time of at least 0.01 seconds, for example at least 2 seconds or in another example, at least 20 seconds.

### The first liquid phase and the optional step d) of separation

The first liquid phase 7 comprising disulfur dibromide is obtained from the reactions presented above for step c). As depicted above, hydrogen bromide (HBr) is also a reaction product as ammonia is present in the acid gas. In an embodiment, the separation of the two reaction products can be made by using fractional distillation, due to the different boiling points of disulfur dibromide (around 69°C) and hydrogen bromide (around 123°C in the form of azeotrope).

In another embodiment, water may be present in the first reaction zone (for example when bromine is used as a 2-phase liquid stream with water). The formed hydrogen bromide may dissolve in water, resulting in a liquid mixture of the first liquid phase 7 of sulfur bromide and aqueous hydrogen bromide. In this case, the separation of the disulfur dibromide component and the aqueous solution of HBr may be made by decantation in a decanter 9. Due to the higher density, disulfur dibromide accumulates at the bottom boot and can be separated as a pure phase (first stream 11), whereas the aqueous phase comprising hydrogen bromide and water remains at the top and is separated as the second stream 13 comprising hydrogen bromide.

In embodiments, the separation step d) is performed and the process further comprises mixing the second stream 13 with the seventh stream 45 before the electrolysis reaction of step j).

### Step e) of mixing the obtained first liquid phase or the first stream, with an additional amount of bromine and water in a second reaction zone

The conversion of the disulfur dibromide into sulfuric acid takes place in the second reaction zone 15. The second reaction zone can be a reactor of any design known in the art. In a preferred embodiment, the reactor 15 is a column reactor, configured to allow for the continuous flow of reactants and products through the column, while maintaining a high level of contact between the reactants. In another preferred embodiment, the second reaction zone 15 is a batch reactor, designed to process a single batch of reactants at a time, with the reaction taking place in a closed vessel. Further, the reaction products may be separated and used as described below.

The reaction taking place in the second reaction zone 15 is according to the following equations:

S₂Br₂ + 5Br₂ + 8H₂O → 2H₂SO₄ + 12HBr

The reaction is performed at a second temperature of at least 80°C. This allows a high conversion of the starting material (disulfur dibromide), favorable kinetics enabling faster occurrence of the reaction, and consequently a high concentration of sulfuric acid.

The second reaction conditions include a second temperature of at least 80°C. For example, the second reaction conditions include a second temperature ranging from 90°C to 325°C; preferably, from 100°C to 220°C; more preferably, from 120°C to 150°C.

With preference, the second reaction conditions comprise a pressure from 1 to 10 barA (*i.e.*, from 0.1 to 1.0 MPa), preferably from 2 to 8 barA (*i.e*, from 0.2 to 0.8 MPa), more preferably from 3 to 7 barA (*i.e.*, from 0.3 to 0.7 MPa).

The water may be demineralized water. The water amount submitted to step d) can be controlled to achieve the desired concentration of sulfuric acid.

In an embodiment, the mass ratio between disulfur dibromide and water is 1:0.2 to 1:2, preferably 1:0.3 to 1:1, more preferably 1:0.5 to 1:0.7 with a stoichiometric ratio being most preferred.

### The optional step f) of separation

In one or more embodiments, the process comprises separating the second liquid phase 21 to obtain a third stream 25 containing unreacted disulfur dibromide and a fourth stream 27 comprising sulfuric acid. This step is advantageously performed by decantation in a decanter 23. Due to the higher density, disulfur dibromide accumulates at the bottom boot and can be separated as a pure phase (third stream 25), whereas the phase comprising sulfuric acid and optionally, water, and unreacted hydrogen bromide, remains at the top and is separated as the fourth stream 27 comprising sulfuric acid.

With preference, the third stream 25 containing unreacted disulfur dibromide is recycled into the second reaction zone 15. Recycling means may comprise lines and an optional pump.

### The step g) of performing a first distillation step

According to the disclosure, the process comprises a step g) of performing a first distillation step on the second liquid phase 21, or on the fourth stream 27 if applicable, to obtain a sulfuric acid-containing stream 33 and a sixth stream 43 comprising hydrogen bromide and/or bromine.

For example, the first distillation is carried out at a temperature ranging from 80 to 250°C; preferably from 100 to 220°C; more preferably at a temperature from 150 to 200°C.

For example, the first distillation is carried out at a pressure ranging from 0.1 MPa to 5.0 MPa, more preferably from 0.15 MPa to 1.5 MPa, most preferably from 0.16 MPa to 1.1 MPa.

The first distillation step results in a sulfuric acid-containing stream 33 that is directed to the second distillation step and in the sixth stream 43 comprising hydrogen bromide and/or bromine.

Stream 35 is a reboiler stream that is recycled in the first column, and the installation may comprise a reboiler 93 on the sulfuric acid-containing stream 33 exiting the first column 31. The reboiler 93 vaporize the liquid at the bottom of the distillation column. This vapor is then reintroduced into the column to help separate components based on their boiling points.

For example, the second distillation is carried out at a temperature ranging from 120 to 330°C; preferably from 150 to 280°C; more preferably at a temperature from 180 to 250°C.

For example, the first distillation is carried out at a pressure ranging from 0.001 MPa to 5.0 MPa, more preferably from 0.01 MPa to 0.5 MPa, most preferably from 0.05 MPa to 0.1 MPa.

Optionally the process comprises a step h) of recovering the sixth stream 43 comprising hydrogen bromide and/or bromine, and recycling it to the second reaction zone 15. In such a case the installation further comprises a line to convey the sixth stream 43 exiting the first distillation column 31 to the second reaction zone 15.

### The step i) of performing a second distillation step

The sulfuric acid-containing stream 33 obtained from the first distillation step is subjected to a second distillation step, wherein the second distillation step is performed at a temperature and a pressure higher than the temperature and pressure of the first distillation step; with preference, the second distillation step is performed for a time greater than the time of the first distillation step.

The second distillation step results in seventh stream 45 comprising hydrogen bromide and/or bromine, and in the fifth stream 39 comprising purified sulfuric acid. Stream 41 is a reboiler stream that is recycled in the second column, and the installation may comprise a reboiler 95 on the sulfuric acid-containing fifth stream 39 exiting the second column 37.

As shown by the examples, it has been found that such a purification step, by two successive distillation steps, allows for separating not only hydrogen bromide but also remaining bromine (Br₂) and therefore allows reaching a high concentration of H₂SO₄ in the fifth stream 39 comprising sulfuric acid at a concentration of at least 90 wt.% of H₂SO₄ based on the total weight of the fifth stream 39; preferably at least 92 wt.%; more preferably at least 95 wt.%; even more preferably at least 96 wt.%; and most preferably at least 98 wt.%.

### The step j) of electrolysis

According to the disclosure, the process further comprises a step of electrolysis of the seventh stream 45 comprising hydrogen bromide and/or bromine. This allows hydrogen and bromine production from aqueous hydrogen bromide.

With preference, step j) comprises the following substeps:
j-1) providing one or more electrolytic cells 53 each comprising an anode, a cathode, and an ion-exchange membrane 57 placed between the anode and the cathode;
j-2) providing the seventh stream 45 at the anode side 59 of the one or more electrolytic cells 53 wherein the seventh stream 45 is or comprises a hydrogen bromide aqueous solution, and a second input flow 61 at the cathode side 55 of the one or more electrolytic cells 53 wherein the second input flow 61 comprising a hydrobromide aqueous solution;
j-3) performing an electrolysis to convert at least a part of the hydrogen bromide of the hydrogen bromide aqueous solution into bromine by operating the one or more electrolytic cells 53 under electrolysis conditions; and
j-4) recovering a liquid effluent 49 comprising bromine from the anode side and a gaseous effluent 47 comprising hydrogen at the cathode side; and
j-5) optionally separating said liquid effluent 49 into a third liquid phase 63 comprising bromine and a fourth liquid phase 65 comprising unreacted hydrogen bromide.

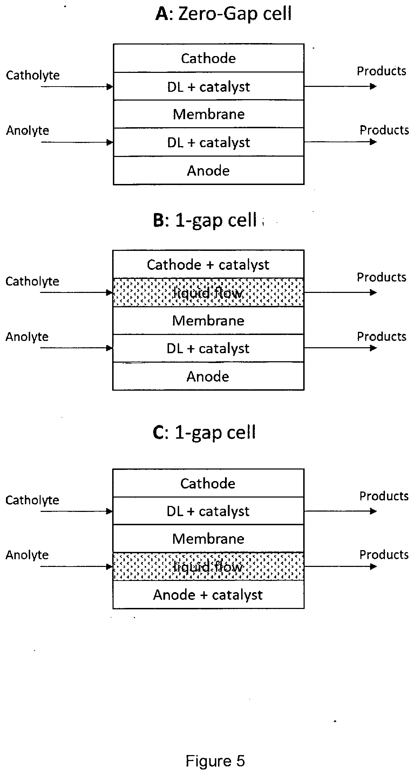

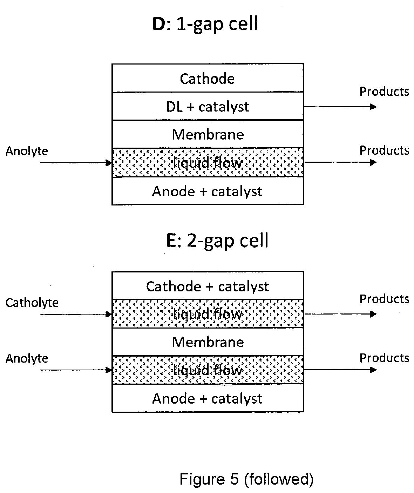

As regards **step j-1)** of providing one or more electrolytic cells 53:
According to the disclosure, the one or more electrolytic cells 53 are selected from zero-gap electrolytic cells, two-gap electrolytic cells, or one-gap electrolytic cells, which could be catholyte-free one-gap electrolytic cells. Preferably the one or more electrolytic cells are zero-gap electrolytic cells, such as membrane electrode assembly (MEA). The different configurations are illustrated in Figure 5.

Suitable materials for the diffusion layer are known to the person skilled in the art. It is preferred that the diffusion layer is a conductive material. For example, the diffusion layer is a composite material comprising polytetrafluoroethylene (PTFE) and a conductive material such as carbon particles.

The anode catalyst and the cathode catalyst may be any suitable catalyst known from the art. The anode catalyst and the cathode catalyst can be the same or different.

For example, the anode catalyst and/or the cathode catalyst are or comprise one or more transition metal-based catalysts comprising ruthenium, rhodium, palladium, osmium, iridium, platinum, titanium, cobalt, iron, nickel, niobium, molybdenum, alloys of titanium, alloys of cobalt, alloys of iron, alloys of nickel, alloys of niobium, alloys of molybdenum, oxides of ruthenium, oxides of rhodium, oxides of palladium, oxides of osmium, oxides of iridium, and oxides of platinum and any mixtures thereof.

For example, the anode catalyst comprises platinum; with preference the anode catalyst comprises at least 0.5 wt.% of platinum based on the total weight of the anode catalyst. However, it was reported that at high bromine concentration, platinum losses could occur due to dissolution and poisoning (Kyu Taek Cho, Michael C. Tucker, Adam Z. Weber, Energy Technology, Volume 4, Issue 6, 2016, Pages 655-678).

Alternatively, DSA^{®} brand anode catalysts produced by De Nora company could be applied. This type of anode uses mixed metal oxide (MMO) coating which allows a long and stable operation.

Also, Lead Dioxide Titanium Electrode (Ti/PbO₂) anode could be used. The lead dioxide coating on titanium substrate has strong corrosion resistance and is suitable for the media.

Mentioned anodes could be further modified by doping Ce or Bi metals to the anode catalyst using the techniques known in the art (Pengfei Xu, Xiaohong He, Junwei Mao and Yongming Tang, Journal of The Electrochemical Society, Volume 166, Number 13, 2019, 638).

For example, the cathode catalyst comprises platinum; with preference the cathode catalyst comprises 0.5 wt.% of platinum based on the total weight of the cathode catalyst.

The ion exchange membrane is a cation-exchange membrane (CEM), preferably a proton-exchange membrane (PEM). Both types of membranes are well-known by the person skilled in the art. Typical cation exchange membranes include proton conducting membranes, such as the perfluorosulfonic acid polymer available under the trade designation Nafion from E. I. du Pont de Nemours and Company (DuPont) of Wilmington, Del. A proton-exchange membrane, or polymer-electrolyte membrane (PEM), is a semipermeable membrane generally made from ionomers and designed to conduct protons while acting as an electronic insulator and reactant barrier, e.g., to oxygen and hydrogen gas.

Another example of commercial PEM membranes are Aquivion membranes developed by Solvay company.

Thus, the cation-exchange membrane can further comprise an ionomer, more particularly an ionomer comprising fluoropolymer having one or more sulfonic acid groups or one or more pendant sulfonic acid groups. For example, the cation-exchange membrane can comprise one or more layers, wherein the layer or at least one of the layers comprises an ionomer, more particularly an ionomer comprising fluoropolymer having one or more sulfonic acid groups or one or more pendant sulfonic acid groups.

For example, the ionomer comprises a perfluorinated sulfonic acid ionomer. For example, said perfluorinated sulfonic acid ionomer comprises sulfonated tetrafluoroethylene based fluoropolymer-copolymer (such as Nafion^{®} or 1,1,2,2-Tetrafluoroethene;1,1,2,2-tetrafluoro-2-[1,1,1,2,3,3-hexafluoro-3-(1,2,2-trifluoroethenoxy)propan-2-yl]oxyethanesulfonic acid), SSC, Aciplex, Flemion, 3M-perfluorinated sulfonic acid ionomer, Aquivion, an ionene, or a combination thereof.

Thus, in an embodiment, the ion-exchange membrane is a proton exchange membrane comprising one or more layers, wherein the layer or at least one of the layers comprises an ionomer comprising a fluoropolymer having one or more pendant sulfonic acid groups.

As regards **step j-2)** of providing the seventh stream 45 at the anode side and a second input flow 61 at the cathode side:
The seventh stream 45 is provided at the anode side and is a hydrogen bromide aqueous solution that optionally comprises bromine.

For example, hydrogen bromide (HBr) is present in the seventh stream 45 at a content of at least 1 wt.% of HBr based on the total weight of the hydrogen bromide aqueous solution; preferably at least 5 wt.%; more preferably at least 10 wt.% or at least 15 wt.%; even more preferably at least 20 wt.% or at least 25 wt.%; most preferably, at least 30 wt.% or at least 35 wt.%; and even most preferably, at least 40 wt.% or at least 45 wt.%.

In a preferred embodiment, hydrogen bromide (HBr) is present in the seventh stream 45 at a content of at most 48.3 wt.% at 20 °C; and forms a constant-boiling azeotrope mixture.

For example, hydrogen bromide (HBr) is present in the seventh stream 45 at a content ranging from 10 to 48.3 wt.% of HBr based on the total weight of the seventh stream 45; preferably ranging from 15 to 47.6 wt.%; more preferably ranging from 17 to 46 wt.%; even more preferably ranging from 19 to 45 wt.% or from 20 to 42 wt.% or from 21 wt.% to 40 wt.% or from 22 wt.% to 39 wt.%.

In a preferred embodiment, the any streams used in an electrolysis step are metal-free; i.e. both the anolyte and the catholyte are metal-free.

Advantageously, the second input flow 61 is a hydrobromide aqueous solution. With preference, the second input flow 61 has a pH ranging from 0.1 to 5.0; preferably, from 0.2 to 3.5; and more preferably, from 0.5 to 2.0.

For example, hydrogen bromide (HBr) is present in the second input flow 61 at a content ranging from 10 to 48.3 wt.% of HBr based on the total weight of the second input flow 61; preferably ranging from 15 to 47.6 wt.%; more preferably ranging from 17 to 46 wt.%; even more preferably ranging from 19 to 45 wt.% or from 20 to 42 wt.% or from 21 wt.% to 40 wt.% or from 22 wt.% to 39 wt.%.

According to the disclosure, the second input flow 61 is an aqueous solution of hydrobromic acid.

Preferably, the second input flow 61 is a lean hydrogen bromide aqueous solution at a content of less than 35 wt.%. More preferably the lean hydrogen bromide aqueous solution has a content of less than 25 wt.%.

For example, the second input flow 61 is or comprises the second stream 13 comprising hydrogen bromide.

For example, the seventh stream 45 and/or the second input flow 61 have liquid minute space velocity ranging from 0.1 to 20; preferably ranging from 0.2 to 2; wherein the liquid minute space velocity (LMSV) is V1/V2, where V1 [L/min] - flow, V2 - volume of half-cell (between to electrode and membrane) wherein the LMSV is normalised.

As regards **step j-3)** of performing an electrolysis:
Operating the one or more electrolytic cells 53 comprises passing a current between the anode and the cathode.

For example, the electrolysis conditions comprise an anode current density of at least 0.5 kA/m² to 10.0 kA/m².

For example, the electrolysis conditions comprise an anode current density ranging from 0.5 to 10.0 kA/m²; preferably, from 0.6 to 9.0 kA/m²; more preferably, from 1.0 to 8.5 kA/m²; even more preferably from 1.5 to 8.0 kA/m² and most preferably from 2.0 to 7.8 kA/m² or from 2.2 to 7.5 kA/m².

In a first embodiment, the electrolysis conditions comprise an anode current density ranging from 0.5 to less than 2.5 kA/m²; preferably, from 0.6 to 2.4 kA/m²; more preferably, from 0.7 to 2.3 kA/m²; even more preferably from 0.8 to 2.2 kA/m² and most preferably from 0.9 to 2.1 kA/m² or from 1.0 to 2.0 kA/m².

In such an embodiment, the process may further comprise a substep j-5) of separating said liquid effluent 49 into a third liquid phase 63 comprising bromine and a fourth liquid phase 65 comprising unreacted hydrogen bromide.

In a second embodiment, the electrolysis conditions comprise an anode current density ranging from 2.5 to 10.0 kA/m²; preferably, from 3.0 to 9.0 kA/m²; more preferably, from 3.5 to 8.5 kA/m²; even more preferably from 4.0 to 8.0 kA/m² and most preferably from 4.5 to 7.8 kA/m² or from 5.0 to 7.5 kA/m².

For example, the electrolysis conditions comprise a voltage of at least 0.9 V or at least 1.0 V; preferably at least 1.1 V or at least 1.2 V.

In a preferred embodiment, the electrolysis conditions comprise a voltage of at least 1.3 V or at least 2.0 V; preferably at least 2.5 V or at least 3.0 V, more preferably at least 3.5 V or at least 4.0 V, even more preferably at least 4.5 V, most preferably at least 5.0 V and even most preferably at least 5.2 V or at least 5.5 V.

For example, the electrolysis conditions comprise a voltage ranging from 0.9 V to 10.0 V or from 1.0 V to 10.0 V; preferably from 1.1 V to 9.5 V, more preferably from 1.2 V to 9.0 V.

In a preferred embodiment, the electrolysis conditions comprise a voltage ranging from 1.3 V to 10.0 V or from 3.0 V to 10.0 V; preferably from 3.5 V to 9.5 V, more preferably from 4.0 V to 9.0 V, even more preferably from 4.5 V to 8.5 V, most preferably from 5.0 V to 8.0 V and even most preferably from 5.2 V to 7.8 V or from 5.5 V to 7.5 V.

The electrolysis conditions comprising high voltage and high current density ensure maximum HBr conversion (>50%) per pass and formation of two-phases system as a liquid effluent 49.

For example, the electrolysis conditions comprise a temperature of the solution during electrolysis that ranges from 20 to 100°C; preferably from 40 to 95°C; more preferably from 50 to 90°C; and even more preferably from 60 to 85°C.

As regards **step j-4)** :
The liquid effluent 49 comprises produced bromine, water, and possibly unreacted hydrogen bromide. In an embodiment, step j-4) further comprises recovering a gaseous effluent 47 comprising hydrogen at the cathode side.

In a preferred embodiment, the step j-4) further comprises cooling the liquid effluent 49 at a temperature ranging from 10 to 40°C before the step j-5) of separation. This can be done using one or more heat exchangers.

In a preferred embodiment, the hydrogen-containing stream 47 is sent to a separator 87 to obtain a purified hydrogen stream 89 and a separated stream 91 comprising unreacted hydrogen bromide and the separated stream 91 is recycled in the seventh stream 45.

As regards **step j-5)** of separating the liquid effluent 49 comprising bromine:

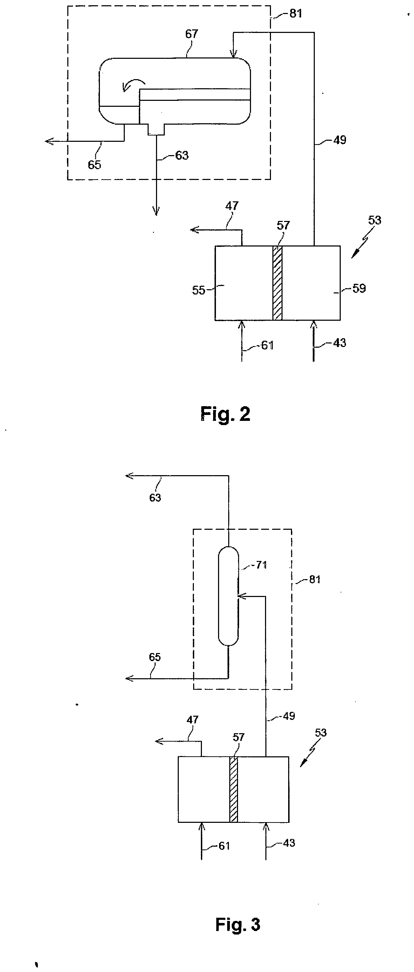

The separation in step j-5) may be performed by distillation or decantation. The separation unit 81 therefore comprises a separation funnel or a decanter 67. In Figure 2, the separation unit 81 comprises a decanter 67 and the separation is performed by decantation.

Indeed, in an embodiment the separation in step j-5) is performed by decantation as illustrated in Figure 2. The liquid effluent 49 is directly sent to a separation unit 81 comprising a decanter 67. There is no need for washing tower. In such a case the substep j-5) comprises a decanting substep j-5.1) comprising passing the liquid effluent 49 comprising bromine in a decanter 67 to obtain the third liquid phase 63 comprising bromine and the fourth liquid phase 65 comprising unreacted hydrogen bromide.

The fourth liquid phase 65 comprising unreacted hydrogen bromide (HBr) is a supernatant that is over the third liquid phase 63 comprising bromine (Br₂). The fourth liquid phase 65 is then going over a wall present within the decanter 67 so that it can be evacuated through a storage tank which can be in fluidic connection with the anode side of the one or more electrolytic cells 53, so that the unreacted hydrogen bromide can be recovered.

The decanting substep j-5.1) is performed for sufficient time to obtain a two-phase separation. For example, the decanting substep j-5.1) is performed during a time of at least 10 minutes; preferably during a time ranging from 10 minutes to 1 hour.

As the pressure into the decanter 67 can be elevated due to the continuous incoming flow of the liquid effluent 49, the decanter 67 can further comprise a degassing outlet that can be useful for removing the vapors, such as oxygen or air. In an embodiment, the decanting substep j-5.1) is performed at a pressure of at least 0.12 MPa to avoid vapor formation so the bromine is kept in a liquid phase.

For example, the decanting substep j-5.1) is performed at a pressure of at least 0.12 MPa; preferably at least 0.15 MPa, more preferably at least 0.20 MPa; and/or at most 0.5 MPa.

In a preferred embodiment the separation in step j-5) is performed by distillation as illustrated in Figure 3. The liquid effluent 49 is directly sent to a separation unit 81 comprising one or more distillation columns 71. There is no need for a washing tower. In such a case the substep j-5) comprises a distillation substep j-5.2) comprising passing the liquid effluent 49 comprising bromine in a distillation unit to obtain a third liquid phase 63 comprising bromine and another fourth liquid phase 65 comprising unreacted hydrogen bromide.

In an embodiment when said separation step j-5 is performed by means of distillation, it could be a column known in the art with a reboiler and condenser. For example, the distillation step could be performed at a pressure of at least 0.11 MPa; preferably at least 0.15 MPa, more preferably at least 0.20 MPa; and/or at most 1.0 MPa.

For example, the distillation step could be performed at a temperature of at least 70°C; preferably at least 80°C, more preferably at least 100°C; and/or at most 150°C.

Whatever the first or the second embodiment is performed, the step j) may further comprise the following substeps:
j-6) concentrating the fourth liquid phase 65 to obtain a fifth liquid phase 69 comprising hydrogen bromide, wherein the concentration of the hydrogen bromide in the fourth liquid phase 65 is lower than the concentration of the hydrogen bromide in the fifth liquid phase 69; and
j-7) recycling the fifth liquid phase 69 comprising hydrogen bromide at the cathode of the one or more electrolytic cells 53 as the second input flow 61.

For example, the bromide is present in the fourth liquid phase 65 at a content of less than 30 wt.% of HBr based on the total weight of the fourth liquid phase; preferably less than 20 wt.%; more preferably less than 10 wt.%; even more preferably less than 2 wt.%.

For example, the bromide is present in the fifth liquid phase 69 at a content ranging from 10 to 68.85 wt.% of HBr based on the total weight of the fifth liquid phase; preferably ranging from 15 to 60 wt.%; more preferably ranging from 17 to 55 wt.%; even more preferably ranging from 19 to 50 wt.% or from 20 to 50 wt.% or from 21 wt.% to 49.85 wt.% or from 22 wt.% to 48.85 wt.%.

The concentration in step j-6) may be performed in a concentration subunit by removing part of the water or by adding bromide; for example, hydrogen bromide.

For example, the concentration is performed by distillation or by mixing the fourth liquid phase 65 with a gaseous phase 75 comprising hydrogen bromide obtained from the second reaction zone 15. This is advantageously performed in a quench column 73.

In an embodiment, the gas stream 79 exiting the first reaction zone 5 and the gas stream 77 exiting the quench column can be vented 83 after an optional pass in a scrubber system 85.

### The step k) of recovering the bromine-containing stream

In an embodiment, the electrolysis conditions of step j-3 comprises an anode current density ranging from 2.5 to 10.0 kA/m²; and step k) of recovering the bromine-containing stream 49 from the electrolysis unit and recycling it to the first reaction zone 5 and/or the second reaction zone 15 is performed.

### Examples

### Example 1

First, S₂Br₂ was prepared from 50 ml of bromine and approximately 62.8 g of sulfur, the mixture was left to react in a closed reactor vessel with heating set to 100 °C. The reaction was left to run overnight and the obtained liquid was distilled under vacuum to give pure S₂Br₂. For H₂SO₄ synthesis, roughly 21.8 g of S₂Br₂ and an additional 30 ml of bromine were mixed. Obtained homogeneous liquid was then gradually pumped in a round bottom flask with 20 ml of demineralized water (18.2 MΩ cm) preheated to 100 °C. The reaction was left to run for around 4 hours and 30 minutes. For the addition of the S₂Br₂ mixture to the round bottom flask, a syringe pump with air-filled 50 ml syringe was used to increase the pressure in the vial containing said mixture.

After the reaction was finished, the top (aqueous) phase was separated from the residual bromine phase with the help of a separatory funnel. Obtained aqueous phase, containing sulfuric acid, was subjected to two consecutive vacuum distillations.

First distillation was carried out at 180 °C and a pressure of 10 mbar, for approximately ~30 min.

The second distillation was performed at 200°C at 10 mbar for approximately ~8h.

Ion chromatography is not suitable for the detection of elementary bromine, and the latter has to be first converted into bromide ions. For that purpose, a 100 µl aliquot after each distillation was reacted with 100 µl of 0.025M sodium thiosulfate. An increase of free bromine would result in the detection of a higher amount of bromide ions after the reaction with thiosulfate.

| Sample | Sulfuric acid, wt.% | Total Br-, wt.% |
|---|---|---|
| Aqueous phase collected after the reaction | 40.97 | 26.34 |
| Product of first distillation | 81.17 | 6.84 |
| Product of the first distillation treated with thiosulfate | -- | 12.67 |
| Product of second distillation | 98.76 | 0.00 |
| Product of the second distillation treated with thiosulfate | -- | 0.00 |

### Example 2

An electrolytic cell comprising Aquvion E98-15 membrane (10 cm²), DSA anode, and Pt/Ti cathode was used for test execution. Both anolyte and catholyte compartments had a volume of ~3.9 ml. The total test duration was around ~60 min at a set temperature of 70°C maintained by an external heating box. 48 wt.% HBr was used as a feed to both anode (0.2 ml/min) and cathode (5 ml/min). The resulting current was ~0.5 A.

The total amount of bromine in anolyte effluent was 1.8 g (0.136 g per 1 ml of aliquot with d=1.39 g/ml), and analysis of catholyte indicated the presence of 0.14 g of bromine. The calculated Faradaic efficiency was 97.3%.

## Claims

1. A process for the production of sulfuric acid and hydrogen from acid gases **characterized in that** it comprises the steps of:
a) providing bromine (3);
b) providing acid gas (1) comprising hydrogen sulfide and ammonia,
c) reacting the acid gas (1) with bromine (3) in a first reaction zone (5) under first reaction conditions comprising a first temperature of at most 80°C to obtain a first liquid phase (7) comprising disulfur dibromide;
d) optionally, separating hydrogen bromide, which is also obtained in step c), from the first liquid phase (7) and recovering a first stream (11) comprising disulfur dibromide and a second stream (13) comprising hydrogen bromide;
e) mixing the obtained first liquid phase (7), or the first stream (11) if applicable, with an additional amount of bromine (17) and water (19) in a second reaction zone (15) and under second reaction conditions comprising a second temperature of at least 80°C to obtain a second liquid phase (21) comprising sulfuric acid, wherein the second temperature is higher than the first temperature;
f) optionally, separating the second liquid phase (21) to obtain a third stream (25) containing unreacted disulfur dibromide and a fourth stream (27) comprising sulfuric acid;
g) performing a first distillation step on the second liquid phase (21), or on the fourth stream (27) if applicable, to obtain a sulfuric acid-containing stream (33) and a sixth stream (43) comprising hydrogen bromide and/or bromine;
h) optionally recovering the sixth stream (43) comprising hydrogen bromide and/or bromine, and recycling it to the second reaction zone (15);
i) performing a second distillation on the sulfuric acid-containing stream (33) wherein the second distillation step is performed at a temperature and pressure higher than the temperature and pressure of the first distillation step to obtain a fifth stream (39) comprising sulfuric acid and a seventh stream (45) comprising hydrogen bromide and/or bromine;
j) subjecting the seventh stream (45) to an electrolysis reaction to obtain a hydrogen-containing stream (47) and a bromine-containing stream (49); wherein the seventh stream (45) is fed at the anode of one or more electrolytic cells (53) and a second input flow (61) being a hydrobromide aqueous solution is fed at the cathode side; and
k) optionally, recovering the bromine-containing stream (49) from the electrolysis reaction and recycling it to the first reaction zone (5) and/or the second reaction zone (15).

2. The process according to claim 1 is **characterized in that** bromine is provided to have a molar ratio Br₂ / (H₂S + NH₃) in the first reaction zone (5) of at least 1.5; preferably at least 3.6.

3. The process according to claim 1 is **characterized in that** the separation step d) is performed and the process further comprises mixing the second stream (13) with the seventh stream (45) before the electrolysis reaction of step j).

4. The process according to any one of claims 1 to 3 is **characterized in that** step d) of separation of the second liquid phase (21) is a decantation step and/or **in that** the third stream (25) containing unreacted disulfur dibromide is recycled into the second reaction zone (15).

5. The process according to any of claims 1 to 4 is **characterized in that** the first reaction conditions comprise a temperature ranging from 15°C to 60°C, preferably from 19°C to 40°C, most preferred at room temperature.

6. The process according to any one of claims 1 to 5 is **characterized in that** the second reaction conditions comprise a temperature ranging from 90°C to 325°C; and/or a pressure ranging from 0.1 to 1.0 MPa.

7. The process according to any one of claims 1 to 6 is **characterized in that** the second reaction conditions comprise a mass ratio between disulfur dibromide and water from 1:0.2 to 1:2, preferably from 1:0.3 to 1:1, most preferably from 1:0.5 to 1:0.7.

8. The process according to any one of claims 1 to 7 is **characterized in that** the fifth stream (39) comprising sulfuric acid comprises sulfuric acid at a concentration of at least 90 wt.% of H₂SO₄ based on the total weight of the fifth stream (39); preferably at least 95 wt.%.

9. The process according to any one of claims 1 to 8 is **characterized in that** step j) comprises the following substeps:
**j-1)** providing one or more electrolytic cells (53) each comprising an anode, a cathode, and an ion-exchange membrane placed between the anode and the cathode;
**j-2)** providing the seventh stream (45) at the anode side of the one or more electrolytic cells (53) wherein the seventh stream (45) and the second input flow (61) are or comprise a hydrogen bromide aqueous solution;
**j-3)** performing an electrolysis reaction to convert at least a part of the hydrogen bromide of the hydrogen bromide aqueous solution into bromine by operating the one or more electrolytic cells (53) under electrolysis conditions; and
**j-4)** recovering a liquid effluent (49) comprising bromine from the anode side and a gaseous effluent (47) comprising hydrogen at the cathode side.

10. The process according to claim 9 is **characterized in that** the electrolysis conditions of step j-3) comprises an anode current density ranging from 0.5 to less than 2.5 kA/m²; and step j) comprises a **step j-5)** of separating the liquid effluent (49) comprising bromine by distillation or by decantation in a separation unit (81) to obtain a third liquid phase (63) comprising bromine; optionally step k) is performed wherein the third liquid phase (63) comprising bromine is recycled to the first reaction zone (5) and/or the second reaction zone (15).

11. The process according to claim 9 is **characterized in that** the electrolysis conditions of step j-3) comprises an anode current density ranging from 2.5 to 10.0 kA/m²; and step k) recovering the bromine-containing stream (49) from the electrolysis unit and recycling it to the first reaction zone (5) and/or the second reaction zone (15) is performed.

12. The process according to any one of claims 1 to 11 is **characterized in that** the hydrogen-containing stream (47) is sent to a separator (87) to obtain a purified hydrogen stream (89) and a separated stream (91), and the separated stream (91) is recycled in the seventh stream (45).

13. The process according to any one of claims 1 to 12 is **characterized in that** the second input flow (61) is or comprises the second stream (13) comprising hydrogen bromide and/or a fifth liquid phase (69) comprising hydrogen bromide.

14. An installation for the treatment of acid gas according to the process of any one of the claims 1 to 13, wherein the installation is **characterized in that** it comprises
- a reactor as a first reaction zone (5) to produce a first liquid phase (7) of disulfur dibromide;
- optionally, a decanter (9) as a means to separate and recover a first stream (11) of disulfur dibromide and a second stream (13) comprising hydrogen bromide;
- a reactor as a second reaction zone (15) to produce a second liquid phase (21) comprising sulfuric acid, and lines to convey the first liquid phase (7) obtained in the first reaction zone to the second reaction zone (15);
- optionally, a decanter (23) as a means to separate and recover a third stream (25) containing unreacted disulfur dibromide and a fourth stream (27) comprising sulfuric acid;
- a distillation unit (29) comprising at least a first distillation column (31) and a second distillation column (37) arranged in series and lines to convey the second liquid phase (21), or the fourth stream (27) if applicable, to the distillation unit (29);
- optionally a line to convey the sixth stream (43) exiting the first distillation column (31) to the second reaction zone (15);
- an electrolysis unit (51) comprising one or more electrolytic cells (53) and lines to convey a second input flow (61) and the seventh stream (45) comprising hydrogen bromide to the electrolysis unit (51); and
- optionally, means to recover a bromine-containing stream (49) from the electrolysis unit (51) and to recycle it to the first reaction zone (5) and/or the second reaction zone (15).

15. The installation according to claim 14 is **characterized in that** the means to recover a bromine-containing stream comprises a separation unit (81); and/or **in that** the installation further comprises a separator (87) and lines to convey a hydrogen-containing stream exiting the electrolysis unit (51) to the separator.
